# EUROPÄISCHE PATENTANMELDUNG

(11) **EP 2 019 244 A2**
(43) Veröffentlichungstag der Anmeldung: **28.01.2009**
(21) Anmeldenummer: 08012553.7
(22) Anmeldetag: 11.07.2008
(51) Int. Cl.: F16L 19/02, F16L 23/18, B60H 1/00

(54) **Dichtungsanordnung**

(30) Priorität: 25.07.2007 DE 102007035223
(71) Anmelder: Behr GmbH & Co. KG, 70469 Stuttgart (DE)
(72) Erfinder: Wesner, Markus, 74196 Neuenstadt (DE)

(57) **Zusammenfassung**

Die Erfindung betrifft eine Dichtungsanordnung (1) für einen Anschluss einer Komponente eines ersten Bauteiles (2) an einer Komponente eines zweiten Bauteiles (3), insbesondere eines Bauteiles einer Kraftfahrzeug-Klimaanlage, mit mindestens einem Dichtelement (4), dadurch gekennzeichnet, dass das mindestens eine Dichtelement zumindest teilweise konisch ausgebildet ist.

## Beschreibung

Die Erfindung betrifft eine Dichtungsanordnung nach dem Oberbegriff des Anspruches 1.

Rohrleitungssysteme von Fahrzeugklimaanlagen, die mit R134a, R744 oder einem anderen Kältemittel betrieben werden, benötigen für jede Verbindung ein vorzugsweise lösbares Kupplungssystem, welches aus zwei Trägerteilen besteht. In der Regel ist eines dieser Trägerteile ein mit einem Zapfen versehener Flansch (männliches Teil) und ein mit einer eingesenkten Ringnut versehener Flansch (weibliches Teil), die ineinandergreifend verschraubt oder auf eine andere Art verspannt werden. Um den hohen Dichtheitsanforderungen zu genügen, wird ferner ein Dichtelement in Form eines elastischen O-Ringes, einer metallischen Scheibe oder eines Schneidringes verwendet.

Die DE 102 61887 A1 offenbart eine Rohrkupplung für die lösbare Kupplung von Rohrleitungsabschnitten eines Hochdruck-Rohrleitungssystem, die jeweils mit einem Kupplungsblock fest verbunden sind, von deinen einer einen Kupplungszapfen und der andere für diesen eine Zapfenaufnahme aufweist, gekennzeichnet durch einen an der Stirnseite des Kupplungszapfens angeordneten Dichtring, der durch eine ihn und den Kupplungszapfen einschließende Schutzhülse in dieser Anordnung gesichert ist. Der Dichtring hat die Form einer Flachdichtung und besteht beispielsweise aus einem Weichmetall, so dass sich sowohl an der radialen Dichtfläche der Zapfenaufnahme als auch an der Stimseite des Kupplungszapfens vorgesehene umlaufende Profilierungen in den Dichtring einpressen können. Die Profilierungen bestehen aus Ringnuten, die zueinander konzentrisch angeordnet sind. Um diese Ringnuten lagegerecht auszuführen, ist ein erhöhter Fertigungsaufwand notwenig. Zudem ist eine Überprüfung der Ringnutqualität nur äußerst kostenintensiv zu gewährleisten.

Die DE 103 26 958 A1 zeigt eine Anschlusseinrichtung, bei der die beiden Kupplungshälften schräg verlaufende Flächenbereiche aufweisen, die bei der Montage wie ein Keil wirken. Diese Flächenbereiche wirken nach Art eines Keilgetriebes zusammen, das die von dem Spannbolzen aufgebrachte Kraft in die Mittelachse des Fluidkanals oder wenigstens in einen Bereich verschiebt, der ungefähr senkrecht durch die Dichtungsanordnung führt, die den Fluidkanal umgibt.

Als Dichtelement dient in dieser Anschlusseinrichtung ein O-Ring. Hierbei verläuft der den O-Ring aufnehmende Zapfen beziehungsweise die den O-Ring aufnehmende Bohrung parallel zur Achse des Fluidkanals. Auf die durch einen Spannbolzen zusammengehaltenen Kupplungshälften wirkt bei hohem Innendruck ein Moment, das zu einem Verbiegen der ursprünglich parallel zueinander verlaufenden Dichtebenen führt. Die Anpresskraft auf den O-Ring ist dadurch nicht mehr konstant über die gepresste Fläche und die Anschlusseinrichtung wird undicht.

Der Erfindung liegt als technisches Problem die Bereitstellung einer Dichtungsanordnung zugrunde, die relativ einfach und kostengünstig in der Herstellung ist und eine hohe Druckstabilität und Dichtigkeit aufweist.

Diese Aufgabe wird durch eine Dichtungsanordnung mit den Merkmalen des Anspruchs 1 gelöst. Vorteilhafte Ausführungsformen sind Gegenstand der jeweiligen abhängigen Ansprüche.

In einem Grundgedanken der Erfindung weist eine Dichtungsanordnung für einen Anschluss einer Komponente eines ersten Bauteiles an einer Komponente eines zweiten Bauteiles, insbesondere eines Bauteiles einer Kraftfahrzeug-Klimaanlage, mindestens ein Dichtelement auf, wobei das mindestens eine Dichtelement zumindest teilweise konisch ausgebildet ist.

Durch die konische Ausbildung des Dichtelementes wird insbesondere die Permeation eines Fluids, insbesondere eines Kältemittels, im Vergleich zu herkömmlichen Dichtelementen deutlich minimiert und somit die Druckdichtigkeit gesteigert.

In einer weiteren Ausführungsform der Erfindung geht der konische Verlauf des Dichtelementes, in einen zylinderförmigen Verlauf über. Dadurch kann ein axiales Gleiten des Dichtelementes, insbesondere bei hohen Druckschwankungen, vermieden werden.

Das Dichtelement besteht aus einem elastischen oder metallischen Werkstoff. In einer weiteren Ausführungsform der Erfindung wird ein elastisches Dichtelement durch metallische Partikel verstärkt. Der Querschnitt des Dichtelementes weist insbesondere einen runden oder rechteckförmigen Querschnitt auf.

Das Dichtelement wird in eine Ringnut eingelegt, die sich entweder auf dem ersten oder zweiten Bauteil befindet. Es können sich auch mehrere Ringnuten auf dem ersten und/oder zweiten Bauteil befinden.

Insbesondere findet eine erfindungsgemäße Dichtungsanordnung Anwendung in Kraftfahrzeugkilmaanlagen, um Leitungen, Flansche oder andere Komponenten druckdicht miteinander zu verbinden. Beispielsweise eignet sich eine erfindungsgemäße Dichtungsanordnung für Kraftfahrzeugklimaanlagen, die mit dem Kältemittel R744 betrieben werden, da für dieses Kältemittel besonders hohe Anforderungen an die Druckdichtigkeit gestellt werden.

Es versteht sich, dass die vorstehend genannten und die nachstehend noch zu erläutemden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere wichtige Merkmale der vorliegenden Erfindung ergeben sich aus der nachfolgenden detaillierten Beschreibung in Verbindung mit den Ansprüchen und den Zeichnungen.

Nachfolgend wird ein bevorzugtes Ausführungsbeispiel einer erfindungsgemäßen Dichtungsanordnung beschrieben und anhand der anliegenden Zeichnung näher erläutert.

Es zeigt:

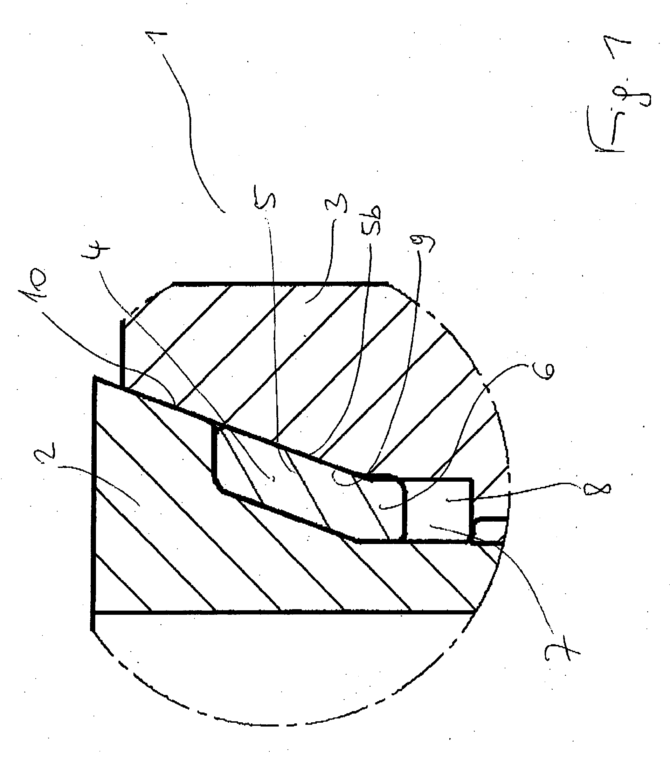

Fig. 1 eine Detailansicht einer Dichtungsanordnung mit Dichtelement gemäß vorliegender Erfindung;

Fig. 1 zeigt eine Ausführungsform einer Dichtungsanordnung 1 gemäß vorliegender Erfindung für einen Anschluss einer Komponente eines ersten Bauteiles 2 an einer Komponente eines zweiten Bauteiles 3. Im Sinne der Erfindung ist als Bauteil insbesondere ein Flansch, eine Leitung oder eine Komponente eines Kältemittel- oder Kühlkreislaufes eines Kraftfahrzeuges zu verstehen, beispielsweise ein Expansionsventil, ein Verdampfer, ein Kondensator, ein Heizkörper oder eine beliebige andere Komponente. Eine derartige Dichtungsanordnung 1 besteht aus einem Dichtelement 4, das in eine Ringnut 7 eingelegt wird.

Die Mantelfläche 9 des Dichtelementes 4, vorzugsweise eines Elastomers, ist hierbei an den konischen, beziehungsweise zylinderförmigen Verlauf der Dichtfläche 5b des zweiten Bauteiles angepasst. Ferner ist die Mantelfläche 9 an den konischen beziehungsweise zylinderförmigen Verlauf der Ringnut 7 angepasst. Durch die konische Ausführung des ersten und zweiten Bauteils auf der Druckaustrittsseite 10 wird insbesondere die Spaltbreite zwischen den Bauteilen minimiert. Zusätzlich wird durch die erfindungsgemäße Ausführungsform die Montage optimiert, da der Einschubweg nur etwa ein Viertel im Vergleich zu einer radialen Dichtung beträgt.

Durch einen Knick, der beim Übergang von dem konischen Verlauf zum zylinderförmigen Verlauf der Dichtfläche und damit auch des Dichtelementes entsteht, wird ein axiales Gleiten des Dichtelementes verhindert.

In einer nicht gezeigten Ausführungsform weist das Dichtelement 4 eine gänzlich konische Form auf.

Das Dichtelement 4 wird bei der Montage des ersten und zweiten Bauteils in den oberen Bereich der Ringnut 7 gedrückt und bildet in diesem Bereich eine formschlüssige Verbindung mit dem ersten und zweiten Bauteil aus. Durch diese Anordnung wird eine Permeation des Kältemittels durch das Elastomer weitestgehend verhindert. Im unteren Bereich der Ringnut bildet sich ein Freiraum 8 aus.

## Patentansprüche

1. Dichtungsanordnung (1) für einen Anschluss einer Komponente eines ersten Bauteiles (2) an einer Komponente eines zweiten Bauteiles (3), insbesondere eines Bauteiles einer Kraftfahrzeug-Klimaanlage, mit mindestens einem Dichtelement (4), **dadurch gekennzeichnet, dass** das mindestens eine Dichtelement zumindest teilweise konisch ausgebildet ist.

2. Dichtungsanordnung nach Anspruch 1, **dadurch gekennzeichnet, dass** das Dichtelement konisch ausgebildet ist.

3. Dichtungsanordnung nach Anspruch 1, **dadurch gekennzeichnet, dass** der konische Verlauf (5) des Dichtelementes in einen zylinderförmigen Verlauf (6) übergeht.

4. Dichtungsanordnung nach einem der vorhergehenden Ansprüche, **dadurch gekennzeichnet, dass** an einer Mantelfläche des ersten und/oder zweiten Bauteils mindestens eine Ringnut (7) für das mindestens eine Dichtelement vorgesehen ist.

5. Dichtungsanordnung nach Anspruch 4, **dadurch gekennzeichnet, dass** das mindestens eine Dichtelement die mindestens eine Ringnut (7) formschlüssig ausfüllt.

6. Dichtungsanordnung nach Anspruch 4 **dadurch gekennzeichnet, dass** das mindestens eine Dichtelement die mindestens eine Ringnut (7) bis auf einen Freiraum (8) formschlüssig ausfüllt.

7. Dichtungsanordnung nach einem der vorhergehenden Ansprüche, **dadurch gekennzeichnet, dass** das Profil des mindestens einen Dichtelementes einen runden oder einen rechteckigen Querschnitt aufweist.

8. Dichtungsanordnung nach einem der vorhergehenden Ansprüche, **dadurch gekennzeichnet, dass** das mindestens eine Dichtelement aus einem elastischen und/oder metallischen Werkstoff besteht.

9. Flanschverbindung, umfassend ein erstes (1) und ein zweites (2) Bauteil mit mindestens einer Dichtungsanordnung nach einem der vorhergehenden Ansprüche.

10. Kraftfahrzeugklimaanlage mit mindestens einer Dichtungsanordnung nach einem der vorhergehenden Ansprüche.
